# EUROPÄISCHE PATENTSCHRIFT

(11) **EP 1 527 137 B1**
(45) Veröffentlichungstag und Bekanntmachung des Hinweises auf die Patenterteilung: **07.03.2007**
(21) Anmeldenummer: 03766215.2
(22) Anmeldetag: 18.07.2003
(51) Int. Cl.: C08L 69/00, C08K 5/523

(54) **SCHLAGZÄHMODIFIZIERTE POLYCARBONAT BLENDS**
IMPACT-RESISTANCE MODIFIED POLYCARBONATE BLENDS
MELANGES DE POLYCARBONATE A RESILIENCE MODIFIEE

(30) Priorität: 29.07.2002 DE 10234420
(43) Veröffentlichungstag der Anmeldung: 04.05.2005
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE)
(86) Internationale Anmeldenummer: PCT/EP2003/007825
(87) Internationale Veröffentlichungsnummer: WO 2004/013228

(56) Entgegenhaltungen:
- EP-A- 0 594 021
- EP-A- 0 992 542

## Beschreibung

Die Erfindung betrifft schlagzähmodifizierte Blends enthaltend Poly(ester)carbonat mit einem mittleren Molekulargewicht (M_{w}) von ≥25 000 g/Mol, aromatische Polyester, Pfropfcopolymer mit Acrylatmonomer-enthaltender Pfropfhülle und oligomere Phosphorsäureester als Flammschutzmittel.

Schlagzähmodifizierte Blends aus Polycarbonat und aromatischen Polyestern sind bekannt.

US-A 4,888,388 beschreibt beispielsweise Zusammensetzungen aus Polycarbonat, Polyethylenterephthalat und einem Pfropfpolymer auf Basis eines Silikon-Butylacrylat-Komppsitkautschuks, welche sich durch verbesserte Tieftemperaturzähigkeit auszeichnen. Flammwidrige Formmassen werden nicht beschrieben.

Auch flammwidrig ausgerüstete, schlagzähmodifizierte Blends aus Polycarbonat und aromatischen Polyestern sind bekannt.

In JP 04 345 657-A2 werden Mischungen aus halogeniertem aromatischen. Polycarbonat, aromatischen Polyestern und Pfropfpolymeren auf Basis von Silikon-Acrylat-Kompositkautschuken beschrieben. Ebenfalls auf halogenhaltigen Flammschutzadditiven basieren die Formmassen, die in der JP 06 239 965-A beschrieben werden. Sie enthalten neben aromatischem Polycarbonat und aromatischen Polyestern, Pfropfpolymere auf Basis von Silikon-Akrylat-Kompositkautschuken und halogenierte Epoxyharze. Die in der WO 94/11429 beschriebenen Formmassen enthalten Polycarbonat, Polyester und ein halogeniertes Arylphosphat als Flammschutzadditiv. Es werden auch solche Zusammensetzungen beschrieben, die darüber hinaus Methacrylat/Butadien/Styrol-Elastomere mit Kern-Schale-Struktur enthalten.

Da mit halogenhaltigen Additiven flammwidrig ausgerüstete Formmassen bei der Verarbeitung durch Freisetzung halogenhaltiger Gase Werkzeugkorrosion verursachen können und bei der Verbrennung gesundheitsschädliche und korrosive Halogenwasserstoffe freisetzen, ist es gewünscht, halogenfrei flammwidrig ausgerüstete. Formmassen zu entwickeln.

Auch halogenfrei flammwidrig ausgerüstete, schlagzähmodifizierte Blends aus Polycarbonat und aromatischen Polyestern sind bekannt.

JP 2001 031 860-A beschreibt Zusammensetzungen mit hoher Schlagzähigkeit, Chemikalien- und Hydrolysebeständigkeit, die Polycarbonat, eine Mischung aus Polyethylen- und Polybutylenterephthalat, ein Pfropfelastomer mit Kern-Schale-Struktur, ein Silikatsalz und als Flammschutzadditiv stabilisierten roten Phosphor und Polytetrafluorethylen (PTFE) enthalten. Derartige Formmassen zeigen eine für viele Anwendungen nicht ausreichende. Zähigkeit und lassen sich nicht in hellen Farben einstellen, wie sie seitens der IT-Industrie beispielsweise für Gehäuse von Monitoren, Druckern, etc. gefordert werden.

In der US-A 5,030,675 werden Formmassen aus Polycarbonat, Polyalkylenterephthalat, Emulsions-ABS-Pfropfpolymeren, Monophaten als Flammschutzadditiv und fluorierten Polyolefinen als Antidrippingmittel beschrieben. Die Formmassen zeichnen sich durch eine verbesserte Bindenahtfestigkeit aus, weisen aber ein vergleichsweise niedriges Schlagzähigkeitsniveau auf. Ferner neigen die verwendeten Flammschutzadditive zum Ausbluten, was zu erheblichen Störungen der Verarbeitungsprozesse führen kann.

Das Problem der Flüchtigkeit des Flammschutzadditivs wird gelöst durch Verwendung von oligomeren Phosphorsäureestern, wie sie in der EP-A 0 594 021 beschrieben wird. Die hier offenbarten PC/ABS-Zusammensetzungen enthalten Polyalkylenterephthalat sowie Oligophosphorsäureester und fluoriertes Polyolefin als Flammschutzadditiv und weisen eine gute Kerbschlagzähigkeit, Spannungsrissbeständigkeit ergänzt durch eine hohe Wärmeformbeständigkeit und störungsfreie Oberflächenbeschaffenheit auf. Sie zeigen jedoch in der Regel eine unzureichende Bindenahtfestigkeit und ein ungünstiges Verarbeitungsfenster, d.h. bei höheren Verarbeitungstemperaturen kommt es zur deutlichen Verschlechterung wesentlicher Eigenschaften wie beispielsweise der Chemikalienbeständigkeit.

Ebenso mit Oligophosphorsäureester flammwidrig ausgerüstet sind die Zusammensetzungen, die in der EP-A 0 829 517, EP-A 0 884 366 und JP 08 073 692-A beschrieben sind. Die hier beschriebenen PC/PET-Formmassen enthalten neben dem Flammschutzmittel und gegebenenfalls weiteren Additiven ein Pfropfpolymer mit Methylmethacrylat in der.Pfropfhülle. Als Beispiele solcher Pfropfpolymere werden MBS und MMA-gepfropfter Polybutadienkautschuk beschrieben. Die in diesen Dokumenten beschriebenen Formmassen zeichnen sich u.a. durch eine verbesserte Beständigkeit gegenüber Chemikalien und Ölen aus.

Aufgabe der vorliegenden Erfindung war es, Zusammensetzungen bereitzustellen, die sich durch eine Kombination aus exzellenter mechanischer Performance, d.h. hoher Kerbschlagzähigkeit, Bindenahtfestigkeit, Reißdehnung im Zugversuch und Spannungsrissbeständigkeit unter Chemikalieneinwirkung, Flammwidrigkeit bis herab zu dünnen Wandstärken sowie eine gute Verarbeitbarkeit im Spritzgussverfahren, d.h. ein großes Verarbeitungsfenster auszeichnen.

Es wurde gefunden, dass Zusammensetzungen enthaltend aromatisches Poly(ester)-carbonat mit einem gewichtsgemittelten Molekulargewicht M_{w} 25 000 g/Mol - 35 000 g/Mol, Polyalkylenterephthalat mit einer intrinsischen Viskosität IV ≤ 0,8 cm³/g, Pfropfcopolymer mit Kern-Schale-Struktur und einem Gehalt an Acrylatmonomoren in der Pfropfhülle von mindestens 20 Gew.-% und einen oligomeren organischen Phosphorsäureester das gewünschte Eigenschaftsprofil aufweisen.

Gegenstand der vorliegenden Erfindung sind daher Zusammensetzungen enthaltend
A) 40 bis 90 Gew.-Teile, bevorzugt 50 bis 80 Gew.-Teile, insbesondere 60 bis 80 Gew.-Teile aromatisches Poly(ester)carbonat mit einem gewichtsgemittelten Molekulargewicht M_{w} 25 000 - 35 000 g/Mol,
B) 0,5 bis 15 Gew.-Teile, bevorzugt 1 bis 12 Gew.-Teile, besonders bevorzugt 3 bis 10 Gew.-Teile, höchst bevorzugt 5 bis 10 Gew.-Teile Polyalkylenterephthalat, bevorzugt Polyethylenterephthalat, insbesondere mit einer intrinsischen Viskosität IV ≤ 0,8 cm³/g,
C) 1 bis 20 Gew.-Teile, bevorzugt 2 bis 15 Gew.-Teile, insbesondere 3 bis 12 Gew.-Teile, höchst bevorzugt 5 bis 10 Gew.-Teile eines Pfropf(co)polymer mit einer Kern-Schale-Morphologie, bestehend aus 10 bis 90 Gew.-%, bevorzugt 30 bis 80 Gew.-%, insbesondere 50 bis 80 Gew.-% (bezogen auf das Pfropf(co)polymer) eines teilchenförmigen Polymerisats mit einer Glasübergangstemperatur unter 0°C, bevorzugt unter -20°C, insbesondere unter -40°C als Pfropfgrundlage und 90 bis 10, vorzugsweise 70 bis 20, insbesondere 50 bis 20 Gew.-% (bezogen auf das Pfropf(co)polymer) Vinyl-monomeren als Pfropfmonomere, wobei die Pfropfmonomere einen Anteil von mindestens 20 Gew.-%, bevorzugt von mindestens 50 Gew.-%, insbesondere von mindestens 75 Gew.-%, (bezogen auf die Pfropfmonomere), an Acrylatmonomeren enthalten,
D) 2 bis 20 Gew.-Teile, bevorzugt 5 bis 15 Gew.-Teile, besonders bevorzugt 7 bis 15 Gew.-Teile, höchst bevorzugt 10 bis 15 Gew.-Teile eines oligomeren organischen Phosphorsäureesters, insbesondere eines solchen auf Basis von Bisphenol-A,
E) 0 bis 1 Gew.-Teile, bevorzugt 0,1 bis 0,5 Gew.-Teile, insbesondere 0,2 bis 0,5 Gew.-Teile fluoriertes Polyolefin,
wobei die Summe der Gew.-Teile aller Komponenten 100 ergibt.

Die erfindungsgemäßen Zusammensetzungen enthalten besonders bevorzugt keine halogenhaltigen Verbindungen wie beispielsweise auf halogenierten Bisphenolen basierende aromatischen Polycarbonate oder Epoxy-Harze.

### Komponente A

Erfindungsgemäß geeignete aromatische Polycarbonate und/oder aromatische Polyestercarbonate gemäß Komponente A, sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Schmelzeverfahren oder durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 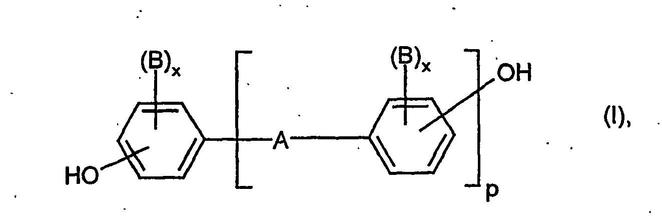 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 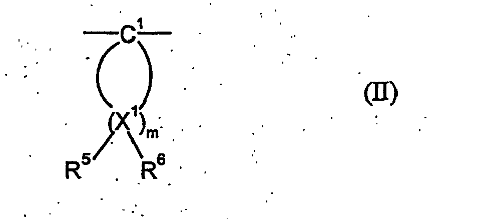 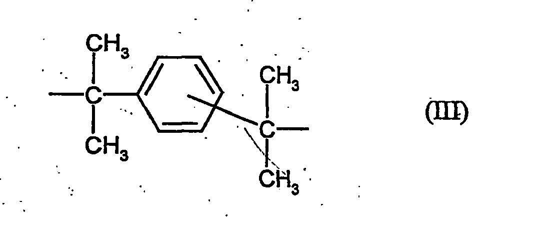
- B: jeweils C₁ bis C₁₂-Alkyl, vorzugsweise Methyl,
- x: jeweils unabhängig voneinander 0, 1 oder 2,
- p: 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m-: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiörganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten, die Copolycarbonate von Bisphenol-A mit bis zu 15 Mol-%, bezogen auf die Molsummen an Diphenolen, anderen als bevorzugt oder besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für.die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-1-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonat-gruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Poly(ester)carbonate haben mittlere Gewichtsmittelmolekulargewichte (M_{w} gemessen durch Gelpermeationchromotographie) von ≥25 000, bevorzugt ≥26 000. Vorzugsweise werden gemäß vorliegender Erfindung Poly(ester)carbonate mit einem gewichtsgemittelten Molekulargewicht bis zu 35 000, bevorzugt bis zu 32 000, besonders bevorzugt bis zu 30 000 g/Mol eingesetzt.

Die thermoplastischen, aromatischen Poly(ester)carbonate können allein oder im beliebigen Gemisch eingesetzt werden.

### Komponente B

Die Polyalkylenterephthalate gemäß Komponente B sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanöl-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, . 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z.B. gemäß DE-A 1900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyethylenterephthalate und/oder Polybutylenterephthalat, insbesondere ist Polyethylenterephthalat bevorzugt. Besonders bevorzugt werden Polyalkylenterephthalate mit hoher Kristallisationsneigung eingesetzt. Diese sind dadurch gekennzeichnet, dass die isotherme Kristallisationszeit bestimmt nach der im Beispielteil angegebenen Methode bevorzugt <20 min, besonders bevorzugt <10 min, insbesondere <7 min ist.

Die Polyalkylenterephthalate besitzen vorzugsweise eine intrinsische Viskosität gemessen in Phenol/o-Dichlorbenzol (1:1 Gewichtsteile) bei 25°C im Ubbelohde-Viskosimeter von ≤0,8 cm³/g; im Allgemeinen ist die intrinsische Viskosität der' Polyalkylenterephthalate größer als 0,3, insbesondere größer 0,4 cm³/g.

Die Polyalkylenterephthalate lassen sich nach bekannten Methoden herstellen (z.B. Kunststoff-Handbuch, Band VIII, S. 695 ff., Carl-Hanser-Verlag, München 1973).

### Komponente C

Für die Pfropfpolymerisate mit Kern-Schale-Struktur C geeignete Pfropfgrundlagen C.1 sind beispielsweise Dienkautschuke, EP(D)M-Kautschuke, also solche auf Basis Ethylen/Propylen und gegebenenfalls Dien-Verbindungen, weiterhin Acrylat-, Polyurethan-, Silikon-, Chloropren- und Ethylen/Vinylacetat-Kautschuke sowie Silikon-Acrylat-Kompositkautschuke.

Bevorzugt sind Dienkautschuke, Silikonkautschuke und Silikon-Acrylat-Kompositkautschuke. Besonders bevorzugt sind Silikon-Acrylät-Kompositkautschuke.

Bevorzugt als Pfropfgrundlage C.1 geeignete Kautschuke sind Dienkautschuke, z. B: solche auf Basis von Butadien oder Isopren, oder Gemische von Dienkautschuken oder Copolymerisate von Dienkautschuken oder deren Gemischen mit weiteren copolymerisierbaren Monomeren. Bevorzugte copolymerisierbare Monomere sind Vinylmonomere ausgewählt aus der Gruppe der Vinylaromaten, kernsubstituierten Vinylaromaten (wie beispielsweise Styrol, α-Methylstyrol, p-Methylstyrol), Methacrylsäure-(C₁-C₈)-Alkylester, (wie Methylmethacrylat, Ethylmethacrylat), Acrylsäure-(C₁-C₈)-Alkylester (wie n-Butylacrylat und tert.-Butylacrylat oder Mischungen hieraus), Vinylcyanide (ungesättigte Nitrile wie Acrylnitril und Methacrylnitril) und Derivate ungesättigter Carbonsäuren wie Anhydride und Imide (beispielsweise Maleinsäureanhydrid und N-Phenyl-Maleinimid).

Besonders bevorzugt ist reiner Polybutadienkautschuk.

Diese Pfropfgrundlagen haben im Allgemeinen eine mittlere Teilchengröße (d₅₀-Wert) von 0,05 bis 5 µm, vorzugsweise 0,1 bis 2 µm, insbesondere 0,1 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil dieser Pfropfgrundlagen beträgt mindestens 30 Gew.%, vorzugsweise mindestens 40 Gew.-% (in Toluol gemessen).

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugt als Pfropfgrundlage C.1. sind für die Pfropfpolymere mit Kern-Schale-Struktur C solche Acrylatkautschuke, Silikonkautschuke oder Silikonacrylat-kompositkautschuke geeignet enthaltend 0 bis 100 Gew.%, bevorzugt 1 bis 99 Gew.%, insbesondere 10 bis 99 Gew.%, besonders bevorzugt 30 bis 99 Gew.-% Polyorganosiloxan-Komponente und 100 bis 0 Gew.%, bevorzugt 99 bis 1 Gew.-%, insbesondere 90 bis 1 Gew.%, besonders bevorzug 70 bis 1 Gew.-% Polyalkyl-(meth)acrylat-Kautschuk-Komponente (die Gesamtmenge der jeweiligen Kautschuk-komponente ergibt 100 Gew.%).

Derartige Kautschuke haben vorzugsweise einen mittleren Teilchendurchmesser von 0,01 bis 0,6 µm.

Als bevorzugte Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen.

Die Polyorganosiloxan-Komponente im Silikonacrylat-Kompositkautschuk kann durch Umsetzung eines Organosiloxans und eines multifunktionalen Vernetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

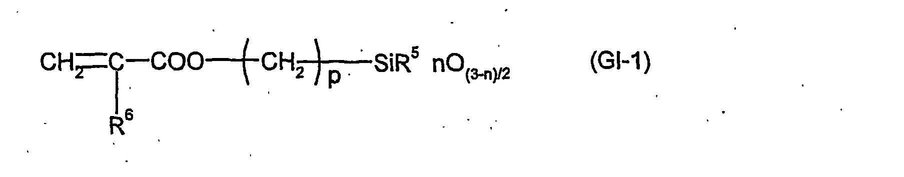

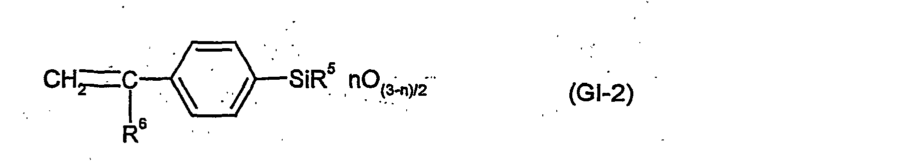

CH₂=CH-SiR⁵ nO_{(3-n)/2} (GI-3)

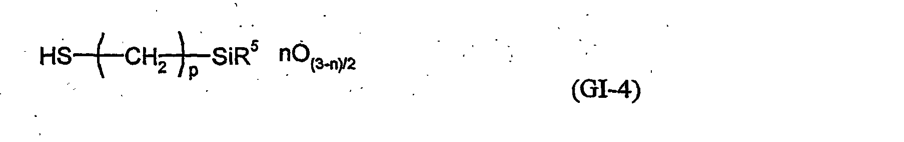

wobei
- R⁵: Methyl, Ethyl, Propyl oder Phenyl,
- R⁶: Wasserstoff oder Methyl,
- n: 0,1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methyl-silan, γ-Methacryloyl-oxy-propylmethoxy-dimethyl-silan, γ-Methacryloyloxypropyl-dimethoxy-methyl-silan, γ-Methacryloyloxypropyl-trimethoxy-silan, γ-Methacryloyloxy-propyl-ethoxy-diethyl-silan, γ-Methacryloyloxypropyldiethoxy-methyl-silan, γ-Methacryloyloxy-butyl-diethoxy-methyl-silan.

Vinylsiloxane, insbesondere Tetramethyl-tetravinyl-cyclotetrasiloxan sind fähig die Sturktur GI-2 zu bilden.

Beispielsweise p-Vinylphenyl-dimethoxy-methylsilan kann Struktur GI-3 bilden. γ-Mercaptopropyldimethoxy-methylsilan, γ-Mercaptopropylmethoxy-dimethylsilan, γ-mercaptopropyldiethoxymethylsilan usw. können Sturktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente im Silikonakrylat-Kompositkautschuk kann aus Alkyl-(meth)acrylaten, Vernetzungsmitteln und pfropfaktiven Monomereinheiten hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexylmethacrylat, n-Laurylmethacrylat und in besonders bevorzugter Weise n-Butylacrylat.

Als Vcmetzungsmittel kommen multifunktionelle Verbindungen zum. Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylmethacrylat kann auch als Vemetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP-07-316 409A und EP-A 0 315 035. Als Pfropfgrundlage C.1 für das Pfropfpolymer C kommen sowohl solche Silikonacrylat-Kompositkautschuke in Frage, deren Silikon- und Acrylatkomponenten eine Kern-Schale-Struktur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebenen Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden.

Für den Aufbau der Pfropfhülle C.2 kommen vorzugsweise Gemische aus
C.2.1 0 bis 80 Gew.-% bevorzugt 0 bis 50 Gew.-%, insbesondere 0 bis 25 Gew.-% (bezogen auf die Pfropfhülle) Vinylaromaten oder kernsubstituierten Vinylaromaten (wie beispielsweise Styrol, α-Methylstyrol, p-Methylstyrol), Vinylcyaniden (ungesättigte Nitrile wie Acrylnitril und Methacrylnitril) und
C.2.2 100 bis 20 Gew.-%, bevorzugt 100 bis 50 Gew.-%, insbesondere 100 bis 75 Gew.-% (bezogen auf die Pfropfhülle) Monomeren ausgewählt aus der Gruppe der (Meth)Acrylsäure-(C₁-C₈)-Alkylester (wie Methylmethacrylat, n-Butylacrylat, t-Butylacrylat) und Derivate (wie Anhydride und Imide) ungesättigter Carbonsäuren (wie Maleinsäureanhydrid und N-Phenyl-Maleinimid)
zum Einsatz.

Besonders bevorzugt besteht die Pfropfhülle aus einem oder einer Mischung mehrerer reiner (Meth)Acrylsäure-(C₁-C₈)-Alkylester, insbesondere aus reinem Methylmethacrylat.

### Komponente D

Bevorzugt kommen als FR-Additiv zum Einsatz solche oligomeren Phosphor- bzw. Phosphonsäureester der allgemeinen Formel (TV) 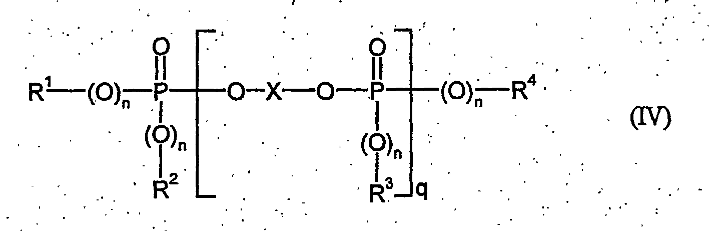 worin
- R¹, R², R³ und R⁴,: unabhängig voneinander jeweils C₁ bis C₈-Alkyl, jeweils gegebenenfalls durch Alkyl, vorzugsweise C₁ bis C₄-Alkyl, substituiertes C₅ bis C₆-Cycloalkyl, C₆ bis C₂₀-Aryl oder C₇ bis C₁₂-Aralkyl,
- n: unabhängig voneinander, 0 oder 1
- q: 0,5 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁ bis C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, O oder 1 sein, vorzugsweise ist n gleich 1.
- q: steht für Werte von 0,5 bis 30, vorzugsweise 0,8 bis 15, besonders bevorzugt 1 bis 5, insbesondere 1 bis 2.
- X: steht besonders bevorzugt für 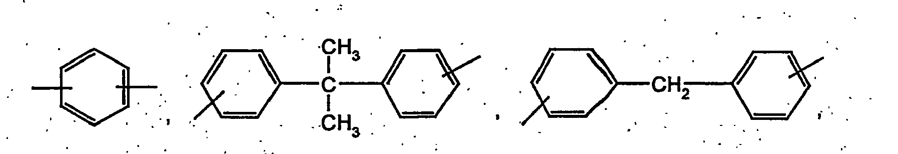 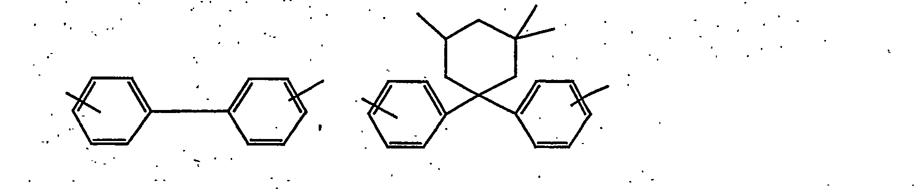 insbesondere leitet sich X von Resorcin, Hydrochinon, Bisphenol A oder Diphenylphenol ab. Besonders bevorzugt leitet sich X von Bisphenol A ab.

Weitere bevorzugte phosphorhaltige Verbindungen sind Verbindungen der Formel (IVa) 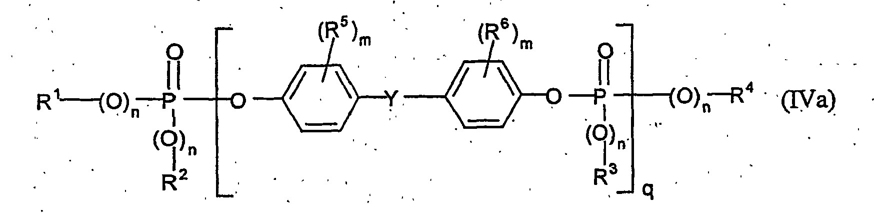 wobei
- R¹, R², R³, R⁴, n und q: die bei der Formel (IV) angegebene Bedeutung haben,
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Besonders bevorzugt ist 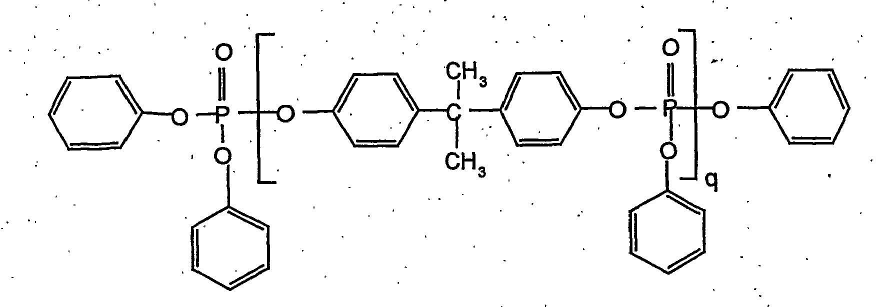 mit q = 1 bis 2.

Die Phosphorverbindungen gemäß Komponente C. sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

### Komponente E

Die Flammschutzmittel entsprechend Komponente D werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines (Co)polymerisats auf Vinylmonomer-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Vinylmonomer-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen. Aggregaten wie Innenknetern, Extrudern, oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethacrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%.

Die fluorierten Polyolefine kommen in Konzentration von 0 bis 1 Gew.-Teilen, bevorzugt von 0,1 bis 0,5 Gew.-Teilen, insbesondere 0,2 bis 0,5 Gew.-Teilen zum Einsatz, wobei sich diese Mengenangaben bei Einsatz eines Koagulats, Präcompounds oder Masterbatches auf das reine fluorierte Polyolefin beziehen.

### Komponente F (Weitere Zusätze)

Die erfindungsgemäßen Zusammensetzungen können weiterhin bis zu 10 Gew.-Teile, bevorzugt 0,1 bis 5 Gew.-Teile, wenigstens eines üblichen Polymeradditivs wie ein Gleit- und Entformungsmittel, beispielsweise Pentaerythrittetrastearat, ein Nukleiermittel, ein Antistatikum, einen Stabilisator, ein Lichtschutzmittel, einen Füll- und Verstärkungsstoff, ein Farbstoff oder Pigment sowie ein weiteres Flammschutzmittel oder einen Flammschutzsynergisten, beispielsweise einen anorganischen Stoff in nanoskaliger Form und/oder ein silikatisches Material wie Talk oder Wollastonit enthalten.

Alle Gewichtsteil-Angaben in dieser Anmeldung sind so normiert, dass die Summe der Gewichtsteile aller Komponenten in der Zusammensetzung 100 ergibt.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfmdungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten wurden auf einer ZSK-25 bei 240°C schmelzcompoundiert. Die Prüfkörper wurden sofern nicht anders , beschrieben auf einer Spritzgießmaschine Typ Arburg 270 E bei 240°C hergestellt.

### Komponente A1

Lineares Polycarbonat auf Basis Bisphenol A mit einem gewichtsgemittelten Molekulargewicht (M_{w}) gemäß GPC von 28 000 g/Mol.

### Komponente A2

Lineares Polycarbonat auf Basis Bisphenol A mit einem gewichtsgemittelten Molekulargewicht (M_{w}) gemäß GPC von 26 000 g/Mol.

### Komponente A3

Lineares Polycarbonat auf Basis Bisphenol A mit einem gewichtsgemittelten Molekulargewicht (M_{w}) gemäß GPC von 23 000 g/Mol.

### Komponente A4

Lineares Polycarbonat auf Basis Bisphenol A mit einem gewichtsgemittelten Molekulargewicht (M̅_{w}) gemäß GPC von 18 000 g/Mol..

### Komponente B

### Polyethylenterephthalat

Es handelt sich um Polyethylenterephthalat mit einer intrinsischen Viskosität IV von 0,74 cm³/g und einer isothermen Kristallisationszeit bei 215°C von ca. 4,2 Minuten.

Die intrinsische Viskosität wird gemessen in Phenol/o-Dichlorbenzol (1:1 Gew.-Teile) bei 25°C.

Die Bestimmung der isothermen Kristallisationszeit von PET mit der DSC-Methode (differential scanning calometry) erfolgt mit einem PERKIN ELMER DSC 7 Differential Scanning Calometer (Einwaage ca. 10 mg, gelochtes Al-Pfännchen) mit folgendem Temperaturprogramm:
1. Aufheizen von 30°C bis 290°C mit 40°C/min,
2. 5 min isotherm bei 290°C,
3. Kühlen von 290°C auf 215°C mit 160°C/min,
4. 30 min isotherm bei 215°C (Kristallisationstemperatur).

Die Auswertungssoftware ist PE Thermal Analysis 4.00.

### Komponente C1

ABS-Pfropfpolymerisat, hergestellt durch Emulsionspolymerisation, mit einem Kautschukanteil von 50 Gew.-% und einem A:B:S-Verhältnis von 15:45:50 und einem Acrylnitril:Styrol-Verhältnis von 30:70.

### Komponente C2

Pfropfpolymerisat von 84 Gew.-Teilen eines Copolymerisats aus Styrol und Acrylnitril im Verhältnis 73:27 auf 16 Gew.-Teile vernetzten Polybutadienkautschuk, hergestellt durch Masse-Polymerisation.

### Komponente C3

Paraloid^{®} EXL 2600: MBS (Methyhnethacrylat-gepfropfter Butadien-Styrol-Kautschuk, Kem-Schale-Struktur, mit einer Glasübergangstemperatur von -80°C) der Fa. Rohm und Haas, Antwerpen (Belgien).

### Komponente C4

Metablen^{®} S2001, Methylmethacrylat-gepfropfter Silikon-Butylacrylat-Kompositkautschuk, Kern-Schale-Strukhzr, der Fa. Mitsubishi Rayon Co., Ltd., Tokyo (Japan).

### Komponente D

Bisphenol-A basierendes Oligophosphat

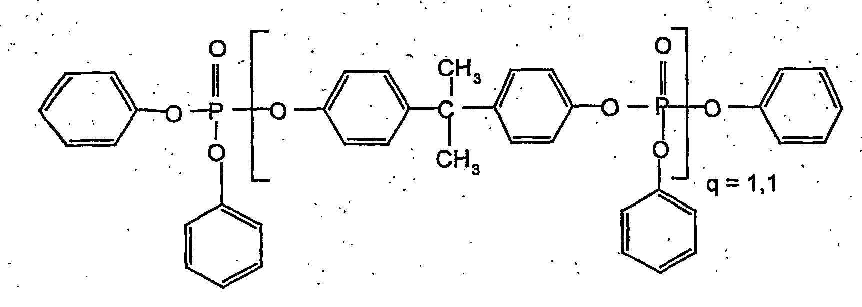

### Komponente E

Blendex^{®} 449, Teflon-Masterbatch aus 50 Gew.-% Styrol-Acrylnitril-Copolymerisat und 50 Gew.-% PTFE der Fa. GE Specialty Chemicals, Bergen op Zoom (Niederlande).

### Komponente F1/F2

Pentaerythrittetrastearat (PETS) (F1)
Phosphitstabilisator (F2)

Das Spannungsrissverhalten (ESC-Verhalten) wird an Stäben der Abmessung 80 mm x 10 mm x 4 mm untersucht. Als Testmedium wird eine Mischung 60 Vol.-% Toluol und 40 Vol.-% Isopropanol verwendet. Die Probekörper werden mittels einer Kreisbogenschablone vorgedehnt und die Zeit bis zum Bruchversagen im diesem Medium als Funktion der Vordehnung bestimmt. Beurteilt wird die maximale Vordehnung, bei der innerhalb von 5 min kein Bruchversagen eintritt.

Der Abfall des ESC-Verhaltens bei höheren Verarbeitungstemperaturen wird wie folgt bewertet: Prüfstäbe der Abmessung 80 mm x 10 mm x 4 mm werden bei 240°C. und 300°C auf einer Spritzgießmaschine Typ Arburg 270 E hergestellt. Die Stäbe werden mit einer Biegedehnung von 2,4 % vorgedehnt bei Raumtemperatur einem Bad aus Rapsöl ausgesetzt und die Zeit bis zum Spannungsrissversagen in beiden Fällen bestimmt. Der Abfall des ESC-Verhaltens wird berechnet als
(Zeit bis zum Versagen bei 240°C - Zeit bis zum Versagen bei 300°C)/(Zeit bis zum Versagen bei 240°C).

Die Bestimmung der Kerbschlagzähigkeit aₖ wird gemäß ISO 180/1 A durchgeführt.

Die Reißdehnung wird im Zugversuch nach ISO 527 bestimmt.

Das Brandverhalten wurde nach UL-Subj. 94 V an Stäben der Abmessung 127 mm x 12,7 mm x 1,5 mm gemessen.

Die Bestimmung der Wärmeformbeständigkeit nach Vicat B erfolgt gemäß DIN 53 460 (ISO 306) an Stäben der Abmessung 80 mm x 10 mm x 4 mm.

Zur Ermittlung der Bindenahtfestigkeit wird gemäß ISO 179/1U die Schlagzähigkeit an der Bindenaht von beidseitig angespritzten Prüfkörpern der Dimension 170 x 10 x 4 mm gemessen.

Die Schmelzeviskosität wird bei 260°C und einer Scherrate von 1 000 s⁻¹ gemäß DIN 54 811 bestimmt.

Eine Zusammenstellung der Eigenschaften der erfindungsgemäßen Zusammensetzung bzw. daraus erhaltener Prüfkörper ist in der Tabelle 1 wiedergegeben.

**Tabelle 1: Formmassen und ihre Eigenschaften**

| | | 1 | V1 | V2 | 2 | 3 | V3 | V4 | 4 | 5 | V5 | V6 |
|---|---|---|---|---|---|---|---|---|---|---|---|---|
| **Komponenten [Gew.-Teile]** | | | | | | | | | | | | |
| A1 | (PC1) | | | | | 70,0 | - | - | - | - | - | |
| A2 | (PC2) | 70,0 | 70,0 | 70,0 | 70,0 | - | - | - | 72,0 | 67,0 | 62,0 | 57,0 |
| A3 (PC3) | - | - | - | - | - | - | 70,0 | - | - | - | - | - |
| A4 | (PC4) | - | - | - | - | - | - | 70,0 | - | - | - | - |
| B | (PET) | 7,0 | 7,0 | 7,0 | 7,0 | 7,0 | 7,0 . | 7,0 | 5,0 | 10,0 | 15,0 | 20,0 |
| C1 | | - | 9,0 | - | - | - | - | - | - | - | - | - |
| (Emulsions-ABS) | | | | | | | | | | | | |
| C2 | (Masse-ABS) | - | - | 9,0 | - | - | - | - | - | - | - | - |
| C3 | (MBS) | - | - | - | 9,0 | - | - | - | - | - | - | - |
| C4 | (Metablen S2001) | 9,0 | - | - | - | 9,0 | 9,0 | 9,0 | 9,0 | 9,0 | 9,0 | 9,0 |
| D | (BDP) | 12,5 | 12,5 | 12,5 | 12,5 | 12,5 | 12,5 | 12,5 | 12,5 | 12,5 | 12,5 | 12,5 |
| E | (Blendex 449) | 1,0 | 1,0 | 1,0 | 1,0 | 1,0 | 1,0 | 1,0 | 1,0 | 1,0 | 1,0 | 1,0 |
| F1 | (PETS) | 0,4 | 0,4 | 0,4 | 0,4 | 0,4 | 0,4 | 0,4 | 0,4 | 0,4 | 0,4 | 0,4 |
| F2 | | 0,1 | 0,1 | 0,1 | 0,1 | 0,1 | 0,1 | 0,1 | 0,1 | 0,1 | 0,1 | 0,1 |
| (Phosphitstabilisator) | | | | | | | | | | | | |

| **Eigenschaften** | | | | | | | | | | | | |
|---|---|---|---|---|---|---|---|---|---|---|---|---|
| Kerbschlagzähigkeit | | 55 | 15 | 8 | 43 | 55 | 48 | 8 | 57 | 43 | 12 | 10 |
| [kJ/m2] | | | | | | | | | | | | |
| Vicat B 120 [°C] | | 103 | 102 | 105 | 101 | 103 | 102 | 101 | 102 | 100 | 99 | 98 |
| Schmelzeviskosität | | 211 | 267 | 192 | 236 | 223 | 168 | 91 | 209 | 184 | 167 | 148 |
| (260°C/1000s⁻¹) [Pas] | | | | | | | | | | | | |
| ESC-Verhalten [%] | | >3,2 | >3,2 | >3,2 | >3,2 | >3,2 | 2,2 | 0,6 | >3,2 | >3,2 | >3,2 | >3,2 |
| ESC-Abfall | | 63 | 79 | - | 56 | - | - | - | - | - | - | - |
| (240°C→300°C) [%] | | | | | | | | | | | | |
| Reißdehnung [%] | | 117 | 85 | 21 | 121 | 117 | 92 | 28 | 116 | 122 | 115 | 35 |
| Bindenahtfestigkeit [kJ/m2] | | 24 | 11 | 7 | 42 | 28 | 20 | 14 | 32 | 20 | 19 | 16 |
| UL94 V-Tesf bei 1,5 mm | | V-0 | V-0 | V-0 | V-0 | V-0 | V-0 | V-0 | V-0 | V-0- | V-1 | V-1 |

| | | | | | | | | | | | | |
|---|---|---|---|---|---|---|---|---|---|---|---|---|
| V = Vergleich n.g. = nicht gebrochen Aus Tabelle 1 geht hervor: 1.) Nur die Formmassen, die als Pfropfpolymer ein solches mit MMA-haltiger Hülle enthalten, besitzen eine ausreichende Kerbschlagzähigkeit, Bindenahtfestigkeit, Reißdehnung und Verarbeitungsstabilität (gemessen am ESC-Abfall bei hohen Verarbeitungstemperaturen). 2.) Bei Einsatz von Polycarbonaten mit geringem mittleren Molekulargewicht verbessert sich zwar naturgemäß die Schmelzefließfähigkeit jedoch nehmen Kerbschlagzähigkeit, ESC-Verhalten, Reißdehnung und Bindenahtfestigkeit ab. Bei Einsatz von Polycarbonaten mit einem gewichtsgemitteltem Molekulargewicht < 25 000 g/Mol erfüllen diese mechanischen Eigenschaften nicht mehr die Anforderungen der avisierten Anwendungsgebiete. 3.) Mit zunehmendem PET/PC-Verhältnis nehmen Kerbschlagzähigkeit, Reißdehnüng, Bindenahtfestigkeit, Wäremformbeständigkeit und vor allen Dingen die Flammwidrigkeit ab. Andererseits nimmt bei gleichbleibender Chemikalienbeständigkeit die Schmelzefließfähigkeit zu. Als besonders günstig erweisen sich daher PET-Gehalte von 5 bis 10 Gew.-%. | | | | | | | | | | | | |

## Patentansprüche

1. Zusammensetzung enthaltend
A) 40 bis 90 Gew.-Teile aromatisches Poly(ester)carbonat mit einem gewichtsgemittelten Molekulargewicht M_{w} von 25 000 g/Mol bis zu 35 000 g/Mol,
B) 0,5 bis 30 Gew.-Teile Polyalkylenterephthalat,
C) 1 bis 20 Gew.-Teile Pfropf(co)polymer mit einer Kern-Schale-Morphologie, bestehend aus
10 bis 90 Gew.-%, (bezogen auf das Pfropf(co)polymer) einer Pfropfgrundlage mit einer Glasübergangstemperatur unter 0°C und
90 bis 10 Gew.-% (bezogen auf das Pfropf(co)polymer) Pfropfmonomere ausgewählt aus mindestens einem Monomer der Gruppe der Vinylaromaten, kernsubstituierten Vinylaromaten, (Meth)Acrylsäure-(C₁-C₈)-Alkylester, Vinylcyanide und Derivate ungesättigter Carbonsäuren, wobei die Pfropfmonomere einen Anteil von mindestens 20 Gew.-% (bezogen auf die Pfropfmonomere) an Acrylatmonomeren enthalten,
D) 2 bis 20 Gew.-Teile eines oligomeren organischen Phosphorsäureesters und
E) 0 bis 1 Gew.-Teil fluoriertes Polyolefin,
wobei die Summe der Gew.-Teile aller Komponenten 100 ergibt.

2. Zusammensetzung gemäß Anspruch 1, wobei das aromatische Poly(ester)carbonat ein M̅_{w} von 26 000 g/Mol bis zu 32 000 g/Mol aufweist.

3. Zusammensetzung gemäß Anspruch 1, wobei das Polyalkylenterephthalat eine intrinsische Viskosität ≤0,8 cm³/g aufweist.

4. Zusammensetzung gemäß Anspruch 1, wobei die Pfropfgrundlage ausgewählt ist aus mindestens einer aus der Gruppe der Dienkautschuke, Copolymerisaten von Dienkautschuken, EP(D)M-Kautschuke, Acrylat- und Silikon-Acrylat-Kompositkautschuke.

5. Zusammensetzung gemäß Anspruch 1, wobei der Anteil an Acrylatmonomer als Pfropfmonomer mindestens 50 Gew.-% beträgt.

6. Zusammensetzung gemäß Anspruch 1, wobei der Anteil an Acrylatmonomer als Pfropfmonomer mindestens 75 Gew.-% beträgt.

7. Zusammensetzung gemäß Anspruch 1, wobei als Komponente D oligomere Phosphor bzw. Phosphonsäureester der Formel (IV) 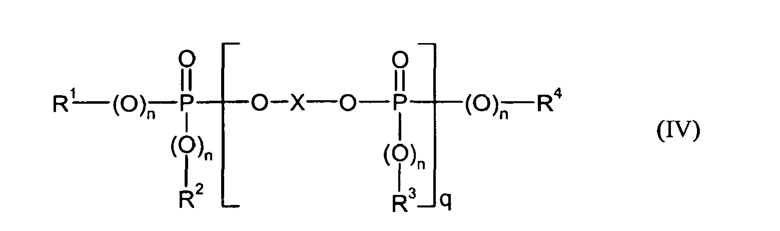 worin
R¹, R², R³ und R⁴, unabhängig voneinander jeweils C₁ bis C₈-Alkyl, jeweils gegebenenfalls durch Alkyl substituiertes C₅ bis C₆-Cycloalkyl, C₆ bis C₂₀-Aryl oder C₇ bis C₁₂-Aralkyl,
n unabhängig voneinander, 0 oder 1
q 0,5 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten,
enthalten sind.

8. Zusammensetzung gemäß Anspruch 7, wobei q 1 bis 5 bedeutet.

9. Zusammensetzung gemäß Anspruch 8, wobei q 1 bis 2 bedeutet.

10. Zusammensetzung gemäß Anspruch 7, wobei X in Formel IV für 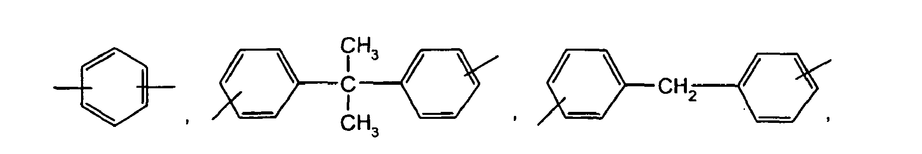 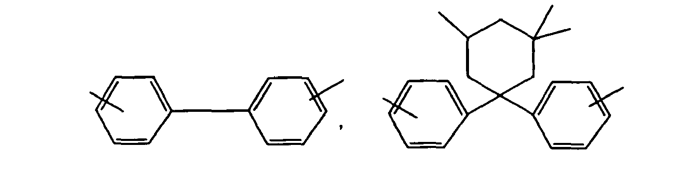 steht.

11. Zusammensetzung gemäß Anspruch 10, wobei X von Hydrochinon, Resorcin oder Bisphenol A abgeleitet ist.

12. Zusammensetzung gemäß Anspruch 1, enthaltend
50 bis 80 Gew.-Teile Komponente A),
1 bis 10 Gew.-Teile Komponente C),
2 bis 15 Gew.-Teile Komponente D).

13. Zusammensetzung gemäß Anspruch 1, enthaltend 5 bis 10 Gew.-Teile Komponente B)

14. Zusammensetzung gemäß Anspruch 1, enthaltend Polyethylenterephthalat als Komponente B).

15. Zusammensetzung gemäß Anspruch 1, enthaltend Additive, ausgewählt aus mindestens einem aus der Gruppe der Gleit- und Entformungsmittel, Nukleiermittel, Antistatika, Stabilisatoren, Lichtschutzmittel, Farbstoff, Pigment, Füll- und Verstärkungsstoffe, Flammschutzmittel verschieden von Komponente D) und Flammschutzsynergisten.

16. Verfahren zur Herstellung der Zusammensetzung gemäß Anspruch 1, in dem man die Bestandteile vermischt und bei erhöhter Temperatur schmelzcompoundiert bzw. schmelextrudiert.

17. Verwendung der Zusammensetzung gemäß Anspruch 1 zur Herstellung von Formteilen.

18. Formteile, erhältlich aus Zusammensetzung gemäß Anspruch 1.

## Claims

1. Composition containing
A) 40 to 90 parts by weight of aromatic poly(ester)carbonate having a weight-average molecular weight M_{w} of 25,000 g/mol to 35,000 g/mol,
B) 0.5 to 30 parts by weight of polyalkylene terephthalate,
C) 1 to 20 parts by weight of graft (co)polymer having a core-shell morphology, consisting of
10 to 90 wt.% (based on the graft (co)polymer) of a graft base having a glass transition temperature below 0°C and
90 to 10 wt.% (based on the graft (co)polymer) of graft monomers selected from at least one monomer from the group of vinyl aromatics, core-substituted vinyl aromatics, (meth)acrylic acid (C₁-C₈) alkyl esters, vinyl cyanides and derivatives of unsaturated carboxylic acids, the graft monomers containing a proportion of at least 20 wt.% (based on the graft monomers) of acrylate monomers.
D) 2 to 20 parts by weight of an oligomeric organic phosphoric acid ester and
E) 0 to 1 part by weight of fluorinated polyolefin,
the sum of the parts by weight of all components being 100.

2. Composition according to claim 1, the aromatic poly(ester)carbonate having a M̅_{w} of 26,000 g/mol to 32,000 g/mol.

3. Composition according to claim 1, the polyalkylene terephthalate having an intrinsic viscosity of ≤ 0.8 cm³/g.

4. Composition according to claim 1, wherein the graft base is selected from at least one of the group comprising diene rubbers, copolymers of diene rubbers, EP(D)M rubbers, acrylate and silicone-acrylate composite rubbers.

5. Composition according to claim 1, wherein the proportion of acrylate monomer as graft monomer is at least 50 wt.%.

6. Composition according to claim 1, wherein the proportion of acrylate monomer as graft monomer is at least 75 wt.%.

7. Composition according to claim 1, wherein oligomeric phosphoric or phosphonic acid esters having the formula (IV) 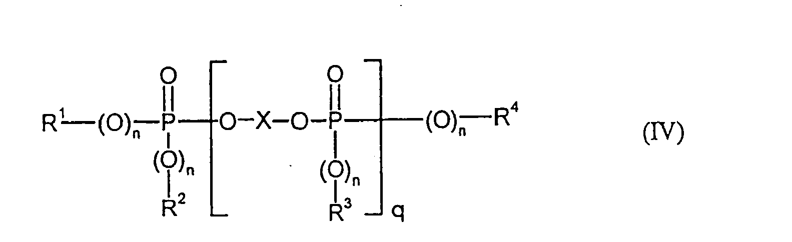 wherein
R¹, R², R³ and R⁴ mutually independently denote C₁ to C₈ alkyl, optionally alkyl-substituted C₅ to C₆ cycloalkyl, C₆ to C₂₀ aryl or C₇ to C₁₂ aralkyl,
n mutually independently denotes 0 or 1
q denotes 0.5 to 30 and
X denotes a mononuclear or polynuclear aromatic radical having 6 to 30 C atoms, or a linear or branched aliphatic radical having 2 to 30 C atoms, which can be OH-substituted and can contain up to 8 ether bonds,
are included as component D.

8. Composition according to claim 7, wherein q denotes 1 to 5.

9. Composition according to claim 8, wherein q denotes 1 to 2.

10. Composition according to claim 7, wherein X in formula IV stands for

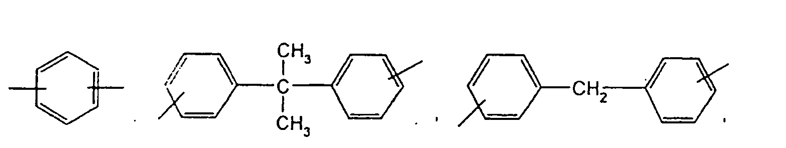

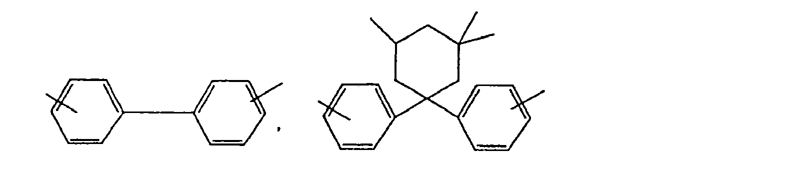

11. Composition according to claim 10, wherein X is derived from hydroquinone, resorcinol or bisphenol A.

12. Composition according to claim 1, containing
50 to 80 parts by weight of component A),
1 to 10 parts by weight of component C),
2 to 15 parts by weight of component D).

13. Composition according to claim 1, containing 5 to 10 parts by weight of component B).

14. Composition according to claim 1, containing polyethylene terephthalate as component B).

15. Composition according to claim 1, containing additives selected from at least one of the group comprising lubricants and release agents, nucleating agents, antistatic agents, stabilisers, light stabilisers, dye, pigment, fillers and reinforcing agents, flame retardants differing from component D) and flame retardant synergists.

16. Process for producing the composition according to claim 1, wherein the components are mixed together and melt compounded or melt extruded at elevated temperature.

17. Use of the composition according to claim 1 for the production of moulded parts.

18. Moulded parts obtainable from the composition according to claim 1

## Revendications

1. Composition contenant
A) 40 à 90 parties en poids d'un poly(ester)carbonate aromatique ayant un poids moléculaire moyen, moyenne en poids M_{w} de 25 000 g/mol à 35 000 g/mol,
B) 0,5 à 30 parties en poids d'un téréphtalate de polyalkylène,
C) 1 à 20 parties en poids d'un (co)polymère greffé à morphologie en noyau-enveloppe, consistant en
10 à 90 % en poids (sur le poids total du (co)polymère greffé) d'un support de greffage ayant une température de transition du second ordre inférieure à 0°C et
90 à 10 % en poids (sur le poids du (co)polymère greffé) de monomères greffés choisis parmi au moins un monomère du groupe des composés vinylaromatiques, des composés vinylaromatiques substitués dans le noyau, des (méth)acrylates d'alkyle en C₁-C₈, des cyanures de vinyle et des dérivés d'acides carboxyliques insaturés, les monomères greffés contenant au moins 20 % de leur poids d'acrylates monomères,
D) 2 à 20 parties en poids d'un ester phosphorique organique oligomère et
E) 0 à 1 partie en poids d'une polyoléfine fluorée,
la somme des parties en poids de tous les composants étant de 100.

2. Composition selon la revendication 1, dans laquelle le poly(ester)carbonate aromatique a un poids moléculaire M̅_{w} de 26 000 g/mol à 32 000 g/mol.

3. Composition selon la revendication 1, dans laquelle le téréphtalate de polyalkylène a une viscosité intrinsèque inférieure ou égale à 0,8 cm³/g.

4. Composition selon la revendication 1, dans laquelle le support de greffage est choisi parmi au moins un composant du groupe des caoutchoucs diéniques, des copolymères de caoutchoucs diéniques, des caoutchoucs EP(D)M, des caoutchoucs composites d'acrylates et de silicone-acrylate.

5. Composition selon la revendication 1, dans laquelle les acrylates monomères représentent au moins 50 % du poids des monomères greffés.

6. Composition selon la revendication 1, dans laquelle les acrylates monomères représentent au moins 75 % du poids des monomères greffés.

7. Composition selon la revendication 1 dans laquelle le composant D consiste en esters phosphoriques ou phosphoniques oligomères de formule (IV) 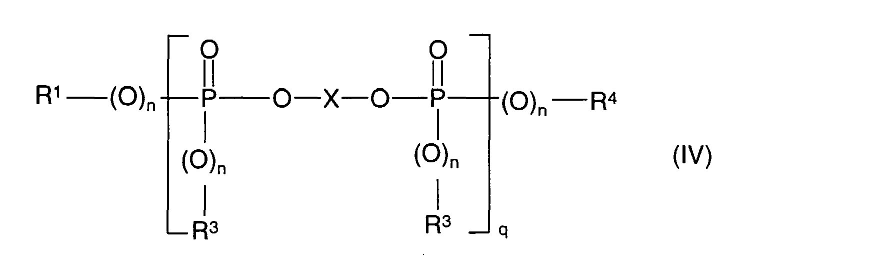 dans laquelle
R¹, R², R³ et R⁴ représentent chacun, indépendamment les uns des autres, un groupe alkyle en C₁-C₈, un groupe cycloalkyle en C₅-C₆, aryle en C₆-C₂₀ ou aralkyle en C₇-C₁₂, ces trois derniers éventuellement substitués par des groupes alkyle,
chacun des indices n, qui sont indépendants les uns des autres, est égal à 0 ou 1,
q est un nombre allant de 0,5 à 30 et
X représente un radical aromatique mono- ou poly-cyclique en C₆-C₃₀ ou un radical aliphatique linéaire ou ramifié en C₂-C₃₀, qui peut être substitué par des groupes OH et peut contenir jusqu'à 8 liaisons éther.

8. Composition selon la revendication 7, pour laquelle q est un nombre allant de 1 à 5.

9. Composition selon la revendication 8 pour laquelle q est un nombre allant de 1 à 2.

10. Composition selon la revendication 7 pour laquelle X de la formule IV représente

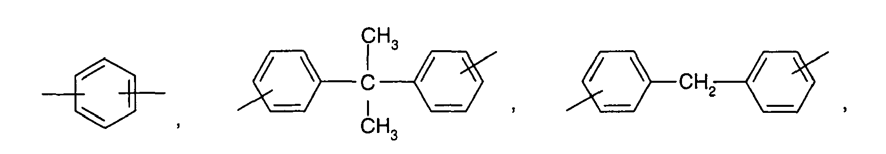

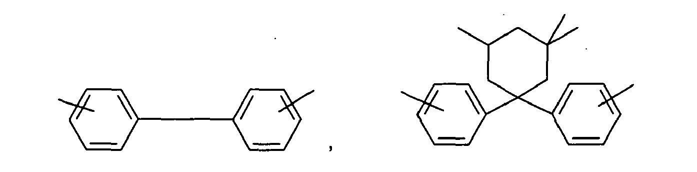

11. Composition selon la revendication 10 dans laquelle X dérive de l'hydroquinone, du résorcinol ou du bisphénol A.

12. Composition selon la revendication 1, contenant
50 à 80 parties en poids du composant A),
1 à 10 parties en poids du composant C),
2 à 15 parties en poids du composant D).

13. Composition selon la revendication 1, contenant 5 à 10 parties en poids du composant B).

14. Composition selon la revendication 1, contenant en tant que composant B) du téréphtalate de polyéthylène.

15. Composition selon la revendication 1, contenant des additifs choisis parmi au moins un additif du groupe des agents lubrifiants et agents de démoulage, des agents de nucléation, des agents antistatiques, des agents stabilisants, des agents de protection contre la lumière, des colorants, des pigments, des matières de charge et matières renforçantes, des agents ignifugeants autres que le composant D) et des synergistes d'agents ignifugeants.

16. Procédé pour la préparation de la composition selon la revendication 1, selon lequel on mélange les constituants et on les soumet à homogénéisation à l'état fondu ou extrusion à l'état fondu à haute température.

17. Utilisation de la composition selon la revendication 1 pour la fabrication de pièces moulées.

18. Pièces moulées obtenues à partir de la composition selon la revendication 1.
